# EUROPÄISCHE PATENTSCHRIFT

(11) **EP 1 723 618 B1**
(45) Veröffentlichungstag und Bekanntmachung des Hinweises auf die Patenterteilung: **26.11.2008**
(21) Anmeldenummer: 05707456.9
(22) Anmeldetag: 17.02.2005
(51) Int. Cl.: G07F 9/10, A21B 1/48

(54) **VORRICHTUNG ZUR HERSTELLUNG GEBRAUCHSFERTIGER BACKWAREN**
DEVICE FOR THE PRODUCTION OF READY-TO-USE BAKED GOODS
DISPOSITIF DE PRODUCTION DE PRODUITS DE BOULANGERIE PRETS A L'EMPLOI

(30) Priorität: 28.02.2004 DE 102004009813
(43) Veröffentlichungstag der Anmeldung: 22.11.2006
(73) Patentinhaber: Schnelldorfer Maschinenbau GmbH, 91625 Schnelldorf (DE)
(72) Erfinder: SCHÜLEIN, Klaus, 91717 Wassertrüdingen (DE); WOLF, Hans-Jürgen, 71540 Murrhardt (DE)
(74) Vertreter: Nunnenkamp, Jörg
(86) Internationale Anmeldenummer: PCT/EP2005/001609
(87) Internationale Veröffentlichungsnummer: WO 2005/083645

(56) Entgegenhaltungen:
- EP-A- 0 406 475
- DE-A1- 10 116 423
- DE-A1- 19 951 263
- US-A- 3 651 752
- US-A- 5 309 824

## Beschreibung

Die Erfindung betrifft eine Vorrichtung zur Herstellung gebrauchsfertiger Backwaren wie Brötchen, Brote etc., mit wenigstens einer Lagervorrichtung, einer Backkammer und einer Entnahmestation, wobei Teiglinge als Vorprodukte von der Lagervorrichtung in die Backkammer überführt werden und anschließend als Fertigprodukte die Entnahmestation verlassen, und wobei die Lagervorrichtung, die Backkammer und die Entnahmestation zusammengenommen einen Back-/Ausgabeautomaten bilden.

Bei einer Vorrichtung der eingangs beschriebenen Ausgestaltung entsprechend der DE 199 51 263 A1 finden sich Magazine, in denen verpackte Vorprodukte von Kleinbackwaren gelagert sind. In einem thermischen Reaktor bzw. einer Backkammer erfahren die Vorprodukte eine thermische Behandlung. Dazu werden die Vorprodukte aus den Magazinen entnommen und in den Reaktionsraum transportiert. Zusätzlich sind Transportcontainer sowie eine Ausgabeeinheit realisiert, in welcher die Transportcontainer entladen werden.

Eine ebenfalls gattungsgemäße Vorrichtung ist Gegenstand der US 5,309,824. Hier werden die Fertigprodukte in einer Aufnahmeschale gesammelt und lassen sich hieraus entnehmen. Die Behandlung verschiedener Vorprodukte und/oder die Frische der Fertigprodukte spielen keine Rolle.

Im Rahmen der DE 203 02 346 U1 wird ebenfalls eine Vorrichtung der eingangs beschriebenen Ausgestaltung angesprochen. Hier wird das fertige Backwerk auf ein Ausschleussystem einer Fördereinrichtung gekippt, welches das fertige Backwerk an ein Zubringerband übergibt. Von dem Zubringerband aus gelangt das Backwerk durch das Ausschleussystem sortiert in zweite Vorratsbehälter. Dadurch mögen in den einzelnen Vorratsbehältern zwar unterschiedliche fertige Backwaren bevorratet werden. Zu der zuvor bereits angesprochenen Frischeproblematik vermag die DE 203 02 346 U1 jedoch wiederum nichts beizutragen. Bei einer anderen Vorrichtung entsprechend der EP 0 096 256 A1 geht es darum, Backwaren aus dünnflüssiger Teigmasse, insbesondere Formwaffeln, herzustellen. Dabei wird die Teigmasse zwischen zwei gegeneinander drückbaren Formhälften eingefüllt, geformt und in einer Backstation ausgebacken. Nach dem Ausbacken werden die Backwaren zu nachfolgenden Bearbeitungsstationen weitertransportiert. Dazu ist insgesamt eine relativ komplizierte und ausladende Maschine realisiert, die sich lediglich zur Anwendung in einem entsprechenden Produktionsbetrieb eignet.

Daneben kennt man durch die DE 40 08 591 A1 einen Ausgabeautomaten für Nahrungsmittel, insbesondere Brötchen. Dabei wird eine vorher abgepackte Menge an Nahrungsmitteln als Fertigprodukte in einem Fach untergebracht, welches durch Einwerfen einer Münze geöffnet werden kann. Zwar ist der bekannte Ausgabeautomat in der Lage, jede beliebige Menge - entsprechend der Füllmenge - ausgeben zu können. Allerdings stellt sich das Problem, das zwischen dem Zeitpunkt des Befüllens des Ausgabeautomaten und der Entnahme der Backwaren bzw. Fertigprodukte durch einen Kunden oft eine lange Zeitspanne liegt.

Als Folge hiervon werden solche Verkaufsautomaten vorwiegend mit Dauerbackwaren wie Keksen, Toastbrot etc. bestückt und eignen sich kaum zur Bevorratung frischer Brötchen oder Brote, die bei der Entnahme ihre Frische noch behalten haben. Hier setzt die Erfindung ein.

Der Erfindung liegt das technische Problem zugrunde, eine Vorrichtung der eingangs beschriebenen Gestaltung so weiter zu entwickeln, dass frische Brötchen bzw. Backwaren wahlweise und bei geringem konstruktiven Aufwand jederzeit zur Verfügung stehen.

Zur Lösung dieser technischen Problemstellung ist eine gattungsgemäße Vorrichtung zur Herstellung gebrauchsfertiger Backwaren wie Brötchen, Brote etc. im Rahmen der Erfindung dadurch gekennzeichnet, dass fertig gebackene Teiglinge von der Backkammer nach Passieren einer von einer Steuereinrichtung beaufschlagten Klappe in ein Vorratsmagazin unterhalb der Backkammer gelangen, dass ferner die Entnahmestation eine Auswahlvorrichtung mit einem karusselförmig ausgebildeten Vorratsmagazin mit einzelnen Kammern sowie mit einer Auswahleinrichtung aufweist, und dass die Steuereinrichtung beim Überschreiten einer von ihr überwachten maximalen Lagerzeit der gebackenen Teiglinge in der Entnahmestation in Verbindung mit der Auswahlvorrichtung dafür sorgt, dass die besagten Teiglinge in dem Vorratsmagazin in einen Behälter ausgeschleust und durch frische Backwaren ersetzt werden.

Im Rahmen der Erfindung werden insgesamt die Lagervorrichtung, die Backkammer und die Entnahmestation (neben weiteren optionalen Einrichtungen) zu einen autark arbeitenden Back-/Ausgabeautomaten zusammengefasst, und zwar regelmäßig in einem gemeinsamen Gehäuse. Auf diese Weise ergibt sich ein kompakter Aufbau. Der solchermaßen entstehende Back-/Ausgabeautomat arbeitet darüber hinaus autark, ist also in der Lage, die Teiglinge als Vorprodukte zu Fertigprodukten bzw. frischen Brötchen, Broten etc. zu verarbeiten.

Dabei werden die Teiglinge in der Regel in halb gebackenem oder gefrosteten Zustand in die Lagervorrichtung verbracht und hierin bevorratet. Je nach Bedarf an Fertigprodukten werden diese bevorrateten Teiglinge gebacken und als gebackene Teiglinge in die Entnahmestation zum unmittelbaren Verzehr überführt. Selbstverständlich kann der Entnahmestation auch ein weiterer Verarbeitungsschritt in der Weise vorgeschaltet sein, dass die Brötchen bzw. das Brot nach dem Backen anschließend geschnitten und verpackt werden. Die Teiglinge verlassen also in gebackenem Zustand die Backkammer und werden dort und/oder anschließend zu den Fertigprodukten verarbeitet. Jedenfalls sind die Backwaren beim Erreichen der Entnahmestation gebrauchsfertig. Alternativ oder zusätzlich können sie aber auch erst hier in den betreffenden Zustand überführt werden. Meistens liegt sogar der verzehrfertige Zustand vor, so dass die solchermaßen hergestellten Backwaren unmittelbar als Nahrungsmittel dienen können.

Der beschriebene Back-/Ausgabeautomat lässt sich grundsätzlich überall dort einsetzen, wo es darauf ankommt, frische Backwaren zur Verfügung zu haben. Das kann in Bäckerein, Lebensmittelläden, Tankstellen etc. der Fall sein. Dabei ist der Back-/Ausgabeautomat grundsätzlich unabhängig von einem Geldeinwurf bzw. einer damit verbundenen Zahleinheit.

In der Regel wird man Back-/Ausgabeautomaten jedoch als Verkaufsautomaten ausbilden. Dann ist eine zusätzliche Zahleinheit realisiert, welche zur Steuerung der Entnahme der Fertigprodukte dient. Bei dieser Zahleinheit kann es sich im einfachsten Fall um einen Münzeinwurf handeln, wobei selbstverständlich auch eine bargeldlose Zahlung umfasst wird und folgerichtig ein Geld- oder Kreditkartenleser alternativ oder zusätzlich Bestandteil der Zahleinheit ist. Grundsätzlich handelt es sich hierbei jedoch um eine optionale Funktion des Back-/Ausgabeautomaten, welcher auch ohne zusätzliche Zahleinheit manuell oder per Programm gesteuert arbeiten kann.

Die Backkammer verfügt in der Regel über eine Heizvorrichtung und ist zusätzlich mit wenigstens einer Rotoreinheit ausgerüstet. Die Rotoreinheit sorgt während des Backvorganges dafür, dass die Teiglinge einwandfrei durchgebacken werden, indem sie beispielsweise an der Heizvorrichtung vorbeigeführt werden. Dabei kann die Heizvorrichtung als Umluftheizung und/oder als Heizung mit Ober- und Unterhitze ausgebildet sein, was den gewünschten gleichmäßigen Backvorgang zusätzlich noch begünstigt.

Die Rotoreinheit vergleichmäßigt folglich den Backvorgang der Teiglinge und sorgt ggf. oder alternativ dafür, dass die gebackenen Teiglinge aus der Backkammer ausgeschleust werden. Je nach Beschaffenheit der Teiglinge und Betrieb der Heizvorrichtung "weiß" eine zumeist vorgesehene Steuereinrichtung, ob die Teiglinge fertiggebacken sind oder nicht. Als Folge hiervon wird die Rotoreinheit ausschleusend betrieben.

Damit die Lagervorrichtung, die Backkammer und die Entnahmestation den kompakten Back-/Ausgabeautomaten bilden können und insofern gemeinsam in einem zugehörigen gemeinsamen Gehäuse untergebracht werden können, ist es erforderlich, dass die Backkammer gegenüber ihrer Umgebung thermisch isolierend ausgebildet wird. Das kann durch entsprechend wärmeisolierte Wände der Backkammer erreicht werden. Jedenfalls verhindert diese Wärmeisolierung, dass die im gleichen Gehäuse bzw. Automatengehäuse wie die Backkammer bevorrateten Teiglinge nicht unbeabsichtigt gebacken werden, sondern nur dann, wenn die Steuereinrichtung einen entsprechenden Befehl an eine zwischen der Backkammer und der Lagervorrichtung vorgesehene Fördereinheit abgibt. Ergänzend trägt hierzu bei, dass die Lagervorrichtung größtenteils einen Kühlbereich zur Bevorratung vereinzelter und entpackter Teiglinge aufweist. Tatsächlich findet sich vorzugsweise eingangsseitig der Backkammer eine Vereinzelungs-/Entpackstation für die vorzugsweise in Folientaschenbahnen in der Lagervorrichtung bevorrateten Teiglinge.

Mit anderen Worten, sind die Teiglinge zumeist in Folientaschen eingeschweißt, wobei mehrere Folientaschen miteinander verbunden eine Folientaschenbahn bilden. Bevor die Teiglinge gebacken werden können, ist es erforderlich, die einzelnen Folientaschen zu öffnen, so dass die Teiglinge freikommen. Das geschieht vor und/oder in dem bereits angesprochenen Kühlbereich, welcher als geschlossene oder offene Kammer ausgebildet sein mag. Jedenfalls stellt der Kühlbereich in der Lagervorrichtung sicher, dass die halb gebackenen oder gefrosteten Teiglinge nicht unbeabsichtigt durch beispielsweise Strahlungswärme von der Backkammer gebacken werden, weil die Lagervorrichtung und die Backkammer in unmittelbarer Nachbarschaft zueinander angeordnet sind.

Um die fertiggebackenen und aus der Backkammer ausgeschleusten Teiglinge in die gebrauchsfertigen Backwaren bzw. die Fertigprodukte zu überführen, ist ergänzend vorgesehen, dass die gebackenen Teiglinge in und/oder vor der Entnahmestation verpackt werden. Das kann beispielsweise so geschehen, dass die gebackenen Teiglinge einzeln oder zu mehreren in einer Papiertüte, einer Folientüte oder dergleichen zusammengefasst werden.

Der beschriebene Back-/Ausgabeautomat ist nicht auf eine gleich bleibende Sorte an Teigmengen beschränkt, sondern es können vielmehr mehrere verschiedene Teiglinge - sowohl was ihre Größe als auch ihre Zusammensetzung angeht - gleichzeitig und/oder hintereinander verarbeitet werden. Zu diesem Zweck mag man je nach Bedarf - aber nicht zwingend - auf unterschiedliche Lagervorrichtungen, Fördereinheiten, Backkammern etc. zurückgreifen.

Die Trennung der einzelnen (verschiedenen) fertiggebackenen Teiglinge findet erst und ausschließlich in der Entnahmestation statt, die über die magazinartig aufgebaute Vorratskammer verfügt. Mit Hilfe der Auswahlvorrichtung werden die einzelnen Kammern mit gleichen gebackenen Teiglingen befüllt und können je nach Kundenwunsch entnommen werden. Erst im Anschluss hieran werden dann die gebackenen Teiglinge zu dem jeweiligen Fertigprodukt verpackt.

Die bereits angesprochene Steuereinrichtung ist in der Regel lernfähig ausgebildet. Das heißt, sie kann auf wechselnde Umwelteinflüsse reagieren. Da die Steuereinrichtung wenigstens die Zufuhr der Teiglinge, deren Backvorgang und ihrer Ausgabe steuert, lässt sich mit Hilfe der Steuereinrichtung der jeweilige Füllgrad der einzelnen magazinartigen Kammern in der Entnahmestation gezielt vorgeben. Dabei hat es sich bewährt, wenn die Steuereinrichtung zumindest aus den Parametern: Aufstellungsort, Wochentag, Uhrzeit, Klimabedingungen, Käuferverhalten - einzeln oder in Kombination - ein Steuerungsprogramm ableitet.

Das kann beispielsweise so aussehen, dass wochentags, im Winter und nachts nur eine geringe Anzahl an Teiglinge gebacken und in der Entnahmestation bevorratet wird. Dagegen wird man am Wochenende im Sommer und vormittags für einen maximalen Ausstoß zu sorgen haben. Selbstverständlich lassen sich diese grundsätzlich verschiedenen Anforderungen noch dahingehend modifizieren, dass der unterschiedliche Bedarf an verschiedenen Backwaren, beispielsweise Weizenbrötchen, Roggenbrötchen, Körnerbrötchen, Brote etc. ergänzend berücksichtigt wird. Ebenso spielt natürlich der Aufstellungsort eine nicht unerhebliche Rolle. So wird man beispielsweise an einer Autobahnraststätte ganz andere Nachfragezeiten und -mengen als an einer Dorfbushaltestelle erwarten.

Immer wird durch die Ausbildung des erfindungsgemäßen Back-/Ausgabeautomaten erreicht, dass ofenfrische Backwaren ständig zur Verfügung stehen. Falls einmal eine von der Steuereinrichtung ebenfalls überwachte maximale Lagerzeit der gebackenen Teiglinge in der Entnahmestation überschritten wurde, so sorgt sie in Verbindung mit der Auswahlvorrichtung dafür, dass diese "alten" Backwaren entfernt und durch frische Backwaren ersetzt werden.

Sofern die Teiglinge in der Lagervorrichtung als Folientaschenbahnen bevorratet werden, kann man diese Taschenbahnen mit längsseitigen Perforationen ausrüsten, um den Transport von der Lagervorrichtung zur Backkammer zu vereinfachen. Denn die dort vorgesehene Fördereinheit mag über in die Perforation eingreifende Transportzapfen verfügen. Dabei sorgt ein zu passierendes Cuttermesser dafür, dass die einzelnen Folientaschen aufgetrennt werden und die unfertigen bzw. zu backenden Teiglinge freigeben. Das Cuttermesser kann mit einer feststehenden und/oder einer rotierenden Klinge ausgerüstet sein.

Die geleerte Folientaschenbahn mag nach der Entnahme der jeweiligen Teiglinge aufgewickelt werden. Das kann auf einer Rolle geschehen, die zugleich als Antriebsrolle für die Fördereinheit zwischen der Lagervorrichtung und der Backkammer dienen mag.

Selbstverständlich liegt es auch im Rahmen der Erfindung, die unfertigen Teiglinge in Säcken bereit zu stellen und per Hand in eine Schütte zu entleeren. Dadurch liegen die Teiglinge als loses Schüttgut zur Verfügung und können mit Hilfe eines Zählers und/oder Vereinzelers in der gewünschten Anzahl zur Verfügung gestellt werden. Auch bei einer Bevorratung der Teiglinge in Folientaschenbahnen wird mit einem Zähler gearbeitet, so dass die mit entsprechenden Werten ausgerüstete Steuereinrichtung die Anzahl der zu backenden Teiglinge bis hin zum Fertigprodukt verfolgen und auf Plausibilität hin prüfen kann. Bei dem Zähler kann es sich vorteilhafterweise um einen berührungslosen Sensor, beispielsweise in der Gestalt einer Lichtschranke, handeln. Es sind aber auch mechanische Berührungssensoren denkbar, die mit einem mechanischen und/oder elektronischen Zählwerk sowie der Steuereinrichtung verbunden werden.

Zur Übergabe der unfertigen bzw. zu backenden Teiglinge an die Backkammer kann - zusätzlich zu der bereits angesprochenen Transporteinheit an dieser Stelle - eine Schütte realisiert werden. Diese Schütte lässt sich an ihrem stromabwertigen Ende mit einem als Federklappe ausgebildeten Verschluss ausrüsten. Der Verschluss bzw. die Klappe mag sich gegen Federkraft öffnen, wenn eine bestimmte Anzahl an Teiglingen bzw. ein vorgegebenes Gewicht überschritten wird. Selbstverständlich ist es ebenso denkbar, die Klappe mit Hilfe der Steuereinrichtung zu öffnen und zu schließen.

Zur Betätigung der Klappe und/oder weiterer Stellorgane ist vorgesehen, den Back-/Ausgabeautomaten mit einem Medium-Verdichter auszurüsten, um pneumatisch die vorerwähnten Stellorgane, Klappen sowie weitere Einrichtungen zu bewegen. Selbstverständlich sind alternativ oder zusätzlich auch elektrische Stelltriebe an diesen Stellen denkbar.

Die wärmeisolierend ausgeführte Backkammer mag über Seitenwände aus mit metallischen Einlagen verstärktem Pressgips gefertigt sein. Auch andere wärmeisolierend wirkende Materialien wie Mineralwolle etc. sind denkbar. Dagegen wird man die Bodenplatte und die Deckplatte der Backkammer üblicherweise als metallische Hohlkörper ausführen, so dass insgesamt ein tragendes Gestell für die Backkammer entbehrlich ist.

Die Rotoreinheit in der Backkammer verfügt in der Regel über eine Vielzahl an Perforationen, um ggf. sich lösende Krümmel etc. in einem an der Unterseite der Backkammer vorgesehenen Behälter zu sammeln. Das trägt Hygieneanforderungen Rechnung und verhindert Schimmelbildung, falls die betreffende Aufnehmewanne regelmäßig gereinigt wird bzw. eine entsprechende Überwachung erfährt.

Zur Ausbildung einer knusprigen und glänzenden Oberfläche der gebackenen Teiglinge empfiehlt es sich, an bzw. in der Backkammer eine Beschwadungsvorrichtung anzuordnen, die in ihrem Bereich für eine erhöhte Luftfeuchtigkeit sorgt. Dazu mag man das zur Beschwadung benötigte Wasser in einem über dem Beschwader bzw. der Beschwadungsvorrichtung angeordneten Wassertank bereit stellen. In der Regel verfügt der Beschwader über kammartige Zerstäubungsflächen, so dass die in der Backkammer befindliche Luft mit Wassertröpfen angereichert wird, die sich auf der Oberfläche der auszubackenden Teiglinge niederschlagen und die Ausbildung einer knusprigen und glänzenden Oberfläche unterstützen. Der Beschwader kann auch als externer Dampferzeuger ausgebildet sein, solange in der Backkammer für die notwendige Feuchte gesorgt ist. Um überschüssigen Wasserdampf aus der Backkammer abzuführen, empfiehlt es sich, eine Belüftungsklappe oder einen Belüftungsventilator in oder an der Backkammer vorzusehen.

Die Rotoreinheit in der Backkammer vollführt in der Regel zwei verschiedene Drehungen. Zu unterscheiden ist hier zwischen einer Drehrichtung, die für einen homogenen Backvorgang sorgt (Backdrehrichtung) und einer Drehrichtung, die das Ausschleusen der gebackenen Teiglinge sicherstellt (Ausschleusdrehrichtung). Beim Wechsel von der Backdrehrichtung in die Ausschleusdrehrichtung wird (zumeist per Steuereinrichtung) dafür gesorgt, dass ein Abweiser in eine solche Position fährt, dass die auszuschleusenden gebackenen Teiglinge über eine nun freiwerdende Entnahmeöffnung die Rotoreinheit und folglich die Backkammer verlassen können.

Dabei ist vorgesehen, dass die vorerwähnte Entnahmeöffnung an der Rotoreinheit mit einer im Boden der Backkammer angeordnete Klappe korrespondiert. Auf diese Weise fallen die fertiggebackenen Teiglinge in die Entnahmestation und dort in eine oder mehrere der magazinartigen Kammern.

Bei der vorerwähnten Klappe im Boden der Backkammer handelt es sich in der Regel um eine Doppelklappe, die sich elektromechanisch oder pneumatisch (mit Hilfe der Steuereinrichtung) betätigen lässt. Hierdurch kann die Backkammer auch im Bereich der betreffenden Klappe wirksam abgedichtet werden, um die nötige Wärmeisolation zu erreichen.

Die einzelnen magazinartigen Kammern in der Entnahmestation sind in der Regel karussellförmig ausgebildet und verfügen über zwei oder mehr in konzentrischen Ringen angeordnete segmentförmige Lagerkammern. Die Lagerkammern lassen sich unterschiedlich groß ausbilden, um verschiedene Sorten an gebackenen Teiglingen oder eine unterschiedliche Anzahl dieser gebackenen Teiglinge bevorraten zu können. Selbstverständlich ist es möglich und wird von der Erfindung umfasst, die Größe dieser magazinartigen Lagerkammern einstellbar auszubilden. Das kann mit wahlweise positionierbaren Kammertrennwänden geschehen.

Ferner ist an dieser Stelle vorgesehen, dass die oben und unten offenen Lagerkammern über einer gehäusefest angeordneten Bodenplatte drehbar angeordnet sind. In der Bodenplatte finden sich wiederum Klappen, die üblicherweise als elektromechanisch oder pneumatisch (von der Steuereinrichtung betätigbare) Doppel-Drehklappen ausgeführt sind. Daneben können die in der Bodenplatte vorgesehenen Klappen natürlich auch als Einfachklappen ausgeführt sein. Ebenso kann die Bodenplatte aus Ringstegen gebildet oder als Gitter kreisförmig ausgeführt sein.

In jedem Fall korrespondiert die eine oder die mehreren Klappen in der betroffenen Bodenplatte vorteilhaft mit einer Ausgabevorrichtung in der Entnahmestation. Die Ausgabevorrichtung ist mit einer Entnahmeklappe verbunden, um die gebackenen Teiglinge bzw. die Fertiprodukte entnehmen zu können. Es versteht sich, dass eine solche Entnahmeklappe dann entfallen kann, wenn der beschriebene Back-/Ausgabeautomat nicht als Verkaufsautomat ausgeführt ist.

Handelt es sich jedoch um einen Verkaufsautomaten, so wird man die obligatorische Zahleinheit - ggf. unter Zwischenschaltung der Steuereinrichtung - mit der betreffenden Entnahmeklappe koppeln, so dass diese nur dann geöffnet wird, wenn zuvor der je nach Kundenwunsch erforderliche Zahlbetrag entrichtet worden ist.

Schließlich kann noch ein Ventilator im Gehäuse des Back-/Ausgabeautomaten realisiert werden. Dieser mag so angeordnet und konzipiert sein, dass er Luft aus dem Automaten absaugt und nach Außen leitet. Dadurch werden zwei Effekte erreicht. Zunächst einmal wird den gebackenen Teiglingen überschüssige Feuchtigkeit entzogen. Hinzukommt, dass der damit verbundene Backgeruch außerhalb des Back-/Ausgabeautomaten intensiviert wird, um das Kaufverhalten entsprechend positiv zu beeinflussen.

Die Steuereinrichtung mag über eine CPU, einen Programmspeicher, Arbeitsspeicher, mindestens eine Eingabeschnittstelle sowie wenigstens eine Ausgabeschnittstelle verfügen. Vorteilhafterweise können die Eingabeschnittstelle und/oder die Ausgabeschnittstelle als Schnittstellen eines Bussystems ausgebildet sein. Zur Kommunikation mit dem Kunden empfiehlt der Back-/Ausgabeautomat eine Wähleinrichtung, beispielsweise in Gestalt eines Tastenfeldes und/oder Anzeigedisplays. Dabei mag es sich um ein berührungssensitives Display sowie eine Eingabe mit Menüführung handeln.

Auf diese Weise kann ein erstes Programm zur kundenwunschabhängigen Bereitstellung von gebackenen Teiglingen gestartet werden. In diesem Zusammenhang wird der ausgewählte Teigling in der Kammer der Entnahmestation gewählt und verlässt durch die in der Bodenplatte vorgesehene Platte die zugehörige magazinartige Kammer. Im Anschluss hieran wird der gebackene Teigling in der Entnahmestation verpackt. Dazu kann er einzeln oder zu mehreren in einer Papiertüte Platz finden, die dann bei geöffneter Entnahmeklappe vom Kunden ergriffen wird.

Im Rahmen eines zweiten Programmes lassen sich gebackene Teiglinge aus der Entnahmestation ausschleusen, wenn eine - von der Steuereinrichtung vorgegebene - Lagerzeit überschritten worden ist. Dazu wird die betreffende Kammer so verstellt, dass die auszuschleusenden alt- gebackenen Teiglinge die Entnahmestation verlassen und beispielsweise vom Servicepersonal entfernt werden können. Es ist aber auch möglich, dass dieser Vorgang routinemäßig erfolgt, wobei die altgebackenen Teiglinge in einem separaten Behälter gesammelt werden, der turnusgemäß geleert werden muss.

Mit Hilfe eines dritten Programmes können Daten über die Kundenanforderungen, insbesondere den Zeitpunkt der Kundenanforderungen, erfasst werden. Diese Daten lassen sich mit einem im Programmspeicher abgelegten Verbrauchsprofil abgleichen, was in Folge dessen entsprechende Änderungen erfährt. Dadurch kann das abgelegte Anforderungsprofil unter dem Oberbegriff "Käuferverhalten" als Parameter Eingang in die Steuereinrichtung finden und jeweils aktualisiert werden.

Mit Hilfe eines vierten Programmes lässt sich die Bereitstellung unfertiger Teiglinge für die Backkammer steuern, um ggf. deren Funktion zu überprüfen. - Selbstverständlich lassen sich einzelne Teilprozesse auch manuell ausführen, wobei Servicepersonal dann über Schnittstellen mit der Steuereinrichtung kommuniziert. Dabei kann vorgesehen sein, dass die Steuereinrichtung akustische und/oder optische Signale abgibt und die Ausführung einzelner Befehle quittiert.

Ein fünftes Programm mag für die Steuerung der Backzeit und Backtemperatur vorgesehen werden sowie für die Steuerung der Abgabe der gebackenen Teiglinge. Dabei ist es denkbar, die vorerwähnten Parameter in Abhängigkeit von der Größe und sonstigen Beschaffenheit der Teiglinge vorzugeben. Geeignete Sensoren unterstützen dabei diesen Prozess, beispielsweise ein Feuchtesensor, um die Restfeuchte der gebackenen Teiglinge zu regulieren.

Es versteht sich, dass die Steuereinrichtung sämtliche vorerwähnten Parameter und Bestandteile programmgesteuert anspricht sowie zugehörige Sensorwerte einliest und verarbeitet. Insbesondere wird die Fördereinheit zwischen der Lagervorrichtung und der Backkammer, die Rotoreinheit und werden schließlich sämtliche Klappen etc. der Entnahmestation entsprechend beaufschlagt.

Darüber hinaus lässt sich für Servicezwecke beispielsweise der Füllstand des Wassers in der Beschwadungseinrichtung ablesen. Ebenso kann die Steuereinrichtung eine Streuvorrichtung beaufschlagen, die die unfertigen Teiglinge mit Zugaben wie Salz, Sesam, Mohn, Kürbiskernen, Sonnenblumenkernen, Kleie, Mehl, etc. bestreut.

Im folgenden wird die Erfindung anhand von mehreren verschiedenen Ausführungsbeispielen näher erläutert. Es zeigen:
- Fig. 1: eine schematische Seitenansicht des erfindungsgemäßen Back- /Ausgabeautomaten im Schnitt mit einer ersten Rotoreinheit in der Backkammer,
- Fig. 2: den Gegenstand nach Fig. 1 im Bereich der Backkammer in Aufsicht,
- Fig. 3: einen teilweisen Schnitt durch Fig. 2,
- Fig. 4: ein anderes Ausführungsbeispiel der Erfindung mit abgewandelter Rotoreinheit,
- Fig. 5: eine Schnittdarstellung durch Fig. 4 entlang der Schnittlinie II-II,
- Fig. 6a: eine Schnittdarstellung gemäß Fig. 4 entlang der Schnittlinie III-III in der Draufsicht,
- Fig. 6b: eine Schnittdarstellung gemäß Fig. 4 entlang der Schnittlinie III-III in der Seitenansicht,
- Fig. 7a: eine Schnittdarstellung gemäß Fig. 4 entlang der Schnittlinie IV-IV in der Draufsicht,
- Fig. 7b: eine Schnittdarstellung gemäß Fig. 4 entlang der Schnittlinie IV-IV in der Seitenansicht,
- Fig. 8: eine Schnittdarstellung gemäß Fig. 4 entlang der Schnittlinie V-V in der Draufsicht,
- Fig. 9a: eine Schnittdarstellung einer zweiten Zuführeinrichtung,
- Fig. 9b: eine Schnittdarstellung einer dritten Zuführeinrichtung,
- Fig. 9c: eine Schnittdarstellung einer vierten Zuführeinrichtung,
- Fig. 10: das Verpacken der Fertigprodukte in der Entnahmestation in einer ersten Variante,
- Fig. 11: den Gegenstand nach Fig. 10 in einer Variante,
- Fig. 12: eine Vorderansicht des erfindungsgemäßen Back- /Ausgabeautomaten und
- Fig. 13: die zugehörige Steuereinrichtung schematisch.

In den Figuren ist eine Vorrichtung zur Herstellung gebrauchsfertiger Backwaren wie Brötchen, Brote etc. dargestellt. Die Vorrichtung verfügt über wenigstens eine Lagervorrichtung 1, eine Backkammer 2, sowie eine Entnahmestation 3. Teiglinge 4 werden als Vorprodukte von der Lagervorrichtung 1 in die Backkammer 2 überführt und gelangen anschließend in die Entnahmestation 3. Erfindungsgemäß bilden die Lagervorrichtung 1, die Backkammer 2 und die Entnahmestation 3 zusammengenommen einen kompakten und autark arbeitenden Back-/Ausgabeautomaten.

Tatsächlich verfügt dieser Back-/Ausgabeautomat über ein Gehäuse 5, welches sämtliche vorerwähnten Aggregate, d. h. die Lagervorrichtung 1, die Backkammer 2 und die Entnahmestation 3 (sowie noch weitere optionale und nachfolgend zu beschreibende Einrichtungen) in seinem Inneren aufnimmt. Der Back-/Ausgabeautomat arbeitet autark, weil die in der Lagervorrichtung 1 bevorrateten Teiglinge 4 in der Backkammer 2 gebacken und über die Entnahmestation 3 als Fertigprodukte wieder ausgegeben werden. Dazu ist lediglich eine nicht dargestellte Energieversorgung erforderlich. Der Back-/Ausgabeautomat muss lediglich von Zeit zu Zeit mit neuen zu backenden Teiglingen 4 bestückt werden. Ansonsten arbeitet er ohne dass Servicepersonal anwesend sein muss.

Die Entnahmestation 3 ist unterhalb der Backkammer 2 angeordnet. Oberhalb der Backkammer 2 findet sich die Lagervorrichtung 1 und darin eine Schütte 6, die gekühlt sein mag bzw. einen Kühlbereich 6 zur Bevorratung der vereinzelten und entpackten Teiglinge 4 definiert. Auf diese Weise gelangen die zu backenden Teiglinge 4 ausgehend von der Schütte 6 bzw. dem Kühlbereich 6 der Lagervorrichtung 1 per Schwerkraft in die darunter befindliche Backkammer 2 und von dort aus wiederum per Schwerkraft in die Entnahmestation 3. Selbstverständlich kann man hier auch mit nicht dargestellten Fördervorrichtungen arbeiten. Aus Gründen der Funktionssicherheit wird jedoch das natürliche Gefälle von der Schütte 6 bis hin zur Entnahmestation 3 genutzt.

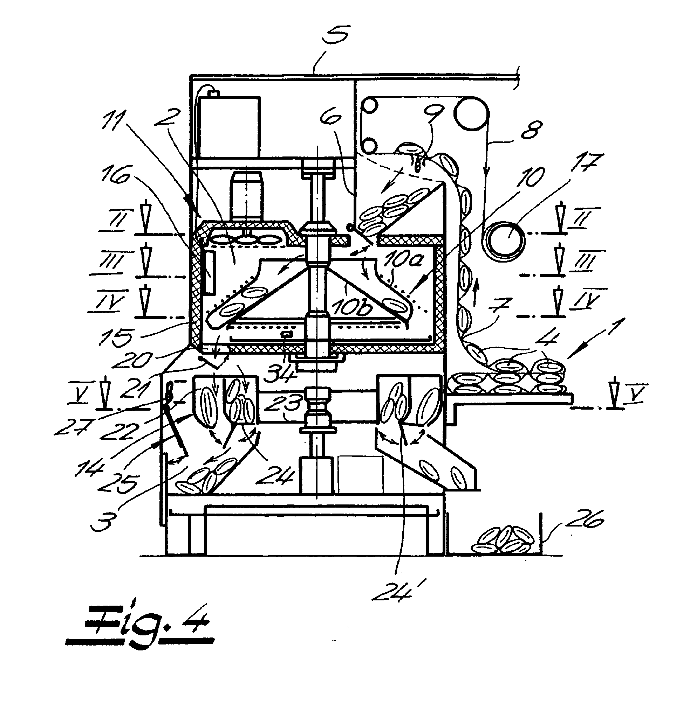

Die halb gebackenen oder gefrosteten Teiglinge 4 finden sich in der Lagervorrichtung 1 in einer Folientaschenbahn 7. Diese Folientaschenbahn 7 bevorratet einzelne zu backende Teiglinge 4 in miteinander verbundenen Folientaschen, die unter Zuhilfenahme eines Transportbandes 8 in eine Position oberhalb der Schütte 6 verbracht werden. Tatsächlich sind mehrere Transportbänder 8 nebeneinander realisiert, die mit unterschiedlichen Teiglingen 4 bestückt sein können. Denkbar sind hier Teiglinge 4 für Weizen-, Roggen-und/oder Körnerbrötchen. Anstelle des lediglich in Fig. 4 im Detail dargestellten Transportbandes 8 können selbstverständlich auch ganz anders gestaltete Fördervorrichtungen 8, wie z. B. drehbare Greifer, Walzen etc. zum Einsatz kommen.

Ein Messer 9 sorgt oberhalb der Schütte 6 dafür, das die einzelnen Folientaschen der Folienbahn 7 nach seinem Passieren aufgetrennt werden, so dass der zuvor in der Folientasche befindliche Teiglinge 4 frei kommen und in die Schütte bzw. den Kühlbereich 6 verbracht werden. Dort werden die ungebackenen Teiglinge 4 solange bevorratet, bis eine fußseitig der Schütte vorgesehene Klappe die Teiglinge 4 in die darunter befindliche Backkammer 2 fallen lässt.

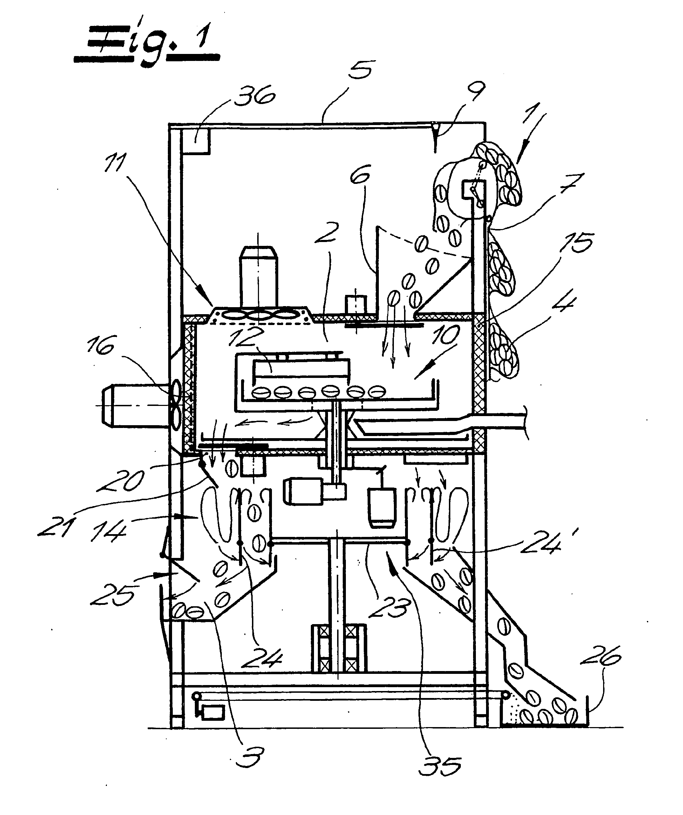

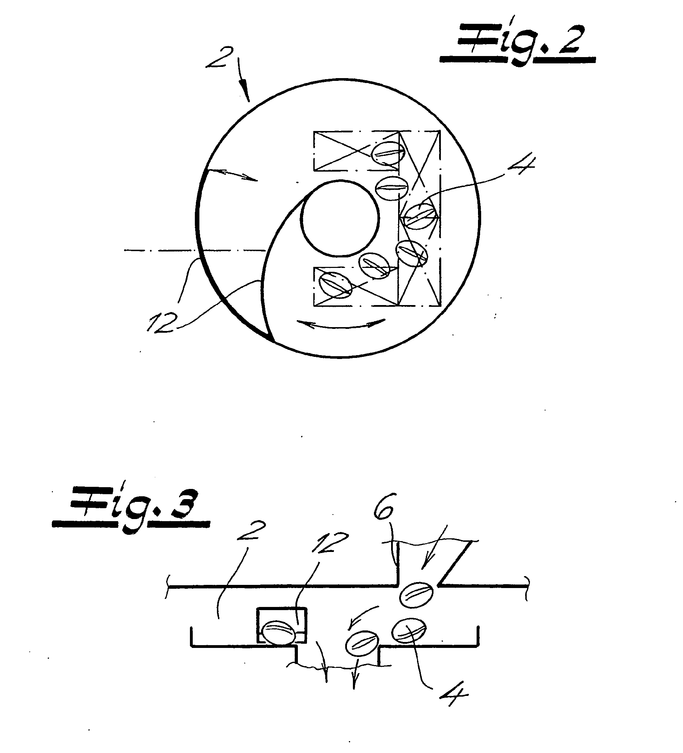

Die im Wesentlichen quaderförmige Backkammer 2 verfügt in ihrem Inneren über eine Rotoreinheit 10, die im Rahmen des Ausführungsbeispiels in zwei Varianten entsprechend den Figuren 1 und 4 vorgestellt wird. Bei der hauptsächlich verfolgten Ausführungsform nach Fig. 1 handelt es sich bei der Rotoreinheit 10 um eine zylindrische Wanne, welche aus einem Drahtgeflecht gefertigt sein mag. Die zu backenden Teiglinge 4 fallen auf diese zylindrische Wanne und werden durch ihre Drehung in der Backdrehrichtung (im Uhrzeigersinn in Fig. 2) gleichmäßig auf dem Drahtgeflecht verteilt und an einer Heizeinrichtung 11 vorbeigeführt. Die Rotoreinheit 10 sorgt also dafür, dass der Backvorgang der Teiglinge 4 (in der Backdrehrichtung) vergleichmäßigt wird.

Gleichzeitig stellt die Rotoreinheit 10 sicher, dass die gebackenen Teiglinge 4 aus der Backkammer 2 gezielt ausgeschleust werden können. Das geschieht in der Ausschleusdrehrichtung (entgegengesetzter Uhrzeigersinndrehung entsprechend Fig. 2). Tatsächlich wird bei diesem Ausschleusvorgang ein Auswurfabweiser 12 von seiner (durchgezogenen) Position am Umfang der zylinderförmigen Rotoreinheit 10 bzw. rotierenden Drahtgeflechtwanne 10 in eine radial einwärts befindliche Position mit Hilfe eines Stellorganes überführt (strichpunktiert dargestellt). Hierfür mag eine Steuereinrichtung 13 sorgen, die auch die sämtlichen zuvor und nachfolgend noch zu beschreibenden Vorgänge initiiert.

Der Auswurfabweiser 12 formt (in der Ausschleusdrehrichtung) einen Trichter, wobei endseitig dieses Trichters eine Öffnung - ggf. in Verbindung mit einer Klappe - freigegeben wird. Wenn sich nun die Rotoreinheit 10 in der Ausschleusdrehrichtung (entgegen dem Uhrzeigersinn) dreht, so werden die gebackenen Teiglinge 4 in diesen Trichter verbracht und verlassen einzeln die Backkammer 2, um in ein unterhalb der Backkammer 2 vorgesehenes Vorratsmagazin 14 zu gelangen, welches Bestandteil der Entnahmestation 3 ist.

Die im Wesentlichen quaderförmige Backkammer 2 verfügt über eine durchgängige Wärmeisolierung 15, welche sie gegenüber ihrer Umgebung thermisch isoliert. Die Wärmeisolierung 15 stellt dabei sicher, dass insbesondere die in der Schütte 6 vorhandenen (sowie gekühlten) unfertigen Teiglinge 4 nicht unbeabsichtigt gebacken werden. Das gleiche gilt für die noch in der Lagervorrichtung 1 in der dortigen Folientaschenbahn 7 befindlichen Teiglinge 4. Das erreicht die Erfindung dergestalt, dass die Wärmeisolierung 15 aus Wärmedämmplatten, beispielsweise Pressgips, ausgebildet ist. Das gilt jedenfalls für die Seitenwände, wohingegen die Bodenplatte und die Deckplatte als hohle Metallkonstruktion mit einer innenliegenden Isolierschicht, beispielsweise aus Mineralwolle, ausgebildet sein kann.

Im Rahmen der Variante nach Fig. 4 setzt sich die Rotoreinheit 10 aus einem äußeren Backkegel 10a und einem inneren Backkegel 10b zusammen. Der äußere Backkegel 10a ist im Wesentlichen als nach oben offener Mantel eines Kegelstumpfes ausgebildet, während der innere Backkegel 10b im Wesentlichen einen Kegelmantel darstellt. Der untere Abschnitt des äußeren Backkegels 10a ist zum unteren Abschnitt des inneren Backkegels 10b hin gekrümmt, wobei die unteren Ränder beider Backkegel 10a, 10b einen engen Spalt bilden. Die Teiglinge 4 sind zwischen der Innenwand des äußeren Backkegels 10a und der Außenwand des inneren Backkegels 10b angeordnet. Beide Backkegel 10a, 10b rotieren während des Backvorganges mit gleicher Drehrichtung.

In jedem Fall werden die Teiglinge 4 durch die Heizeinrichtung 11, welche als Umluftheizung und/oder Strahlungsheizung ausgebildet ist, gleichmäßig erhitzt. Dabei sorgt die Rotoreinheit 10 jeweils dafür, dass die Teiglinge 4 gleichmäßig gebacken werden.

Wie bereits bei der Rotoreinheit nach Fig. 1, so sind auch die Backkegel 10a, 10b vorzugsweise als Gitterrost oder als Lochblech ausgeführt, welches mit einer Anti-Haftschicht versiegelt ist. Dadurch wird ein Anhaften der gebackenen Teiglinge 4 verhindert.

Ein zusätzlicher Beschwader 16 innerhalb der Backkammer 2 sorgt dafür, dass in der Backkammer 2 ein bestimmter Feuchtegehalt vorliegt. Dieser Feuchtegehalt lässt sich mit Hilfe eines Feuchtesensors erfassen, welcher den Feuchtegehalt an die Steuereinrichtung 13 meldet, die ihrerseits den Beschwader 16 entsprechend ansteuert. Zu dem Beschwader 16 gehört ein oberhalb der Backkammer 2 angeordneter Wasserbehälter. Aus diesem gelangen Wassertröpfchen auf die kammartig übereinander angeordneten beheizten Lamellen des Beschwaders 16 und verteilen sich folglich als Mikrowassertröpfchen in der Backkammer 2. Diese Wassertröpfchen schlagen sich auf der Oberfläche der Teiglinge 4 nieder, die folglich befeuchtet wird. Dadurch wird die Ausbildung einer knusprigen und glänzenden Oberfläche der Teiglinge 4 innerhalb der Backkammer 2 unterstützt.

Mit Hilfe einer Aufwickelrolle 17 wird die Folientaschenbahn 7 nach Ausbringen der Teiglinge 4 aufgewickelt. Die Aufwickelrolle 17 kann als Transportwalze fungieren, in dem sie mit der Folientaschenbahn 7 in Reibschluss steht bzw. über Stifte verfügt, die in Perforationslöcher der Folientaschenbahn 7 eingreifen.

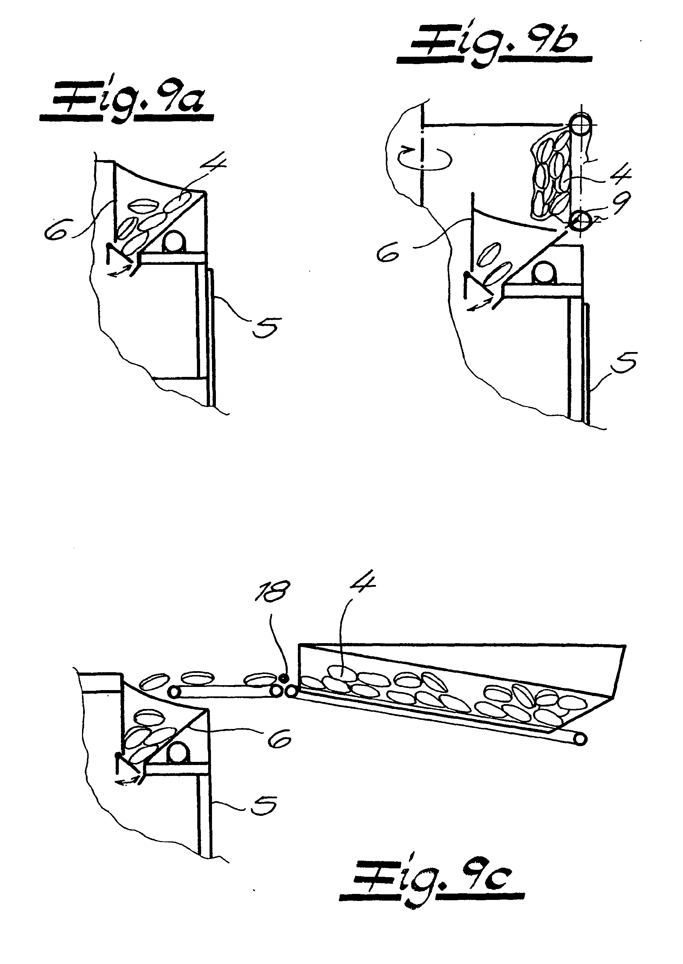

In den Figuren 9a, 9b und 9c sind andere Zuführeinrichtungen als in den Figuren 1 und 4 dargestellt. Tatsächlich kommt bei der Variante nach Fig. 9b ein Trommelmagazin mit mehreren Kammern für in Folie eingeschweißte unfertige Teiglinge 4 zum Einsatz. Zur Entnahme der einzelnen in dem zugehörigen Lager-und Transportband 7 eingeschweißten unfertigen Teiglinge 4 dient wiederum das Messer bzw. die Messervorrichtung 9, die an dieser Stelle rotierend ausgeführt ist. Im Rahmen der Variante nach Fig. 9c ist die Schütte 6 für lose Teiglinge 4 vorgesehen. Diese Teiglinge 4 werden über eine als Transportband ausgebildete Fördervorrichtung zugeführt und passieren eine Zählvorrichtung bzw. einen Zähler 18, der auch bei den anderen Varianten realisiert ist. Mit Hilfe des Zählers 18 können die vereinzelten Teiglinge 4 vor dem Backen gezählt und in der Steuereinrichtung 13 registriert werden. Dadurch ist die Steuereinrichtung 13 in der Lage, die Anzahl der unfertigen Teiglinge 4 mit denjenigen der Fertigprodukte in der Entnahmestation 3 auf Vollständigkeit hin zu überprüfen.

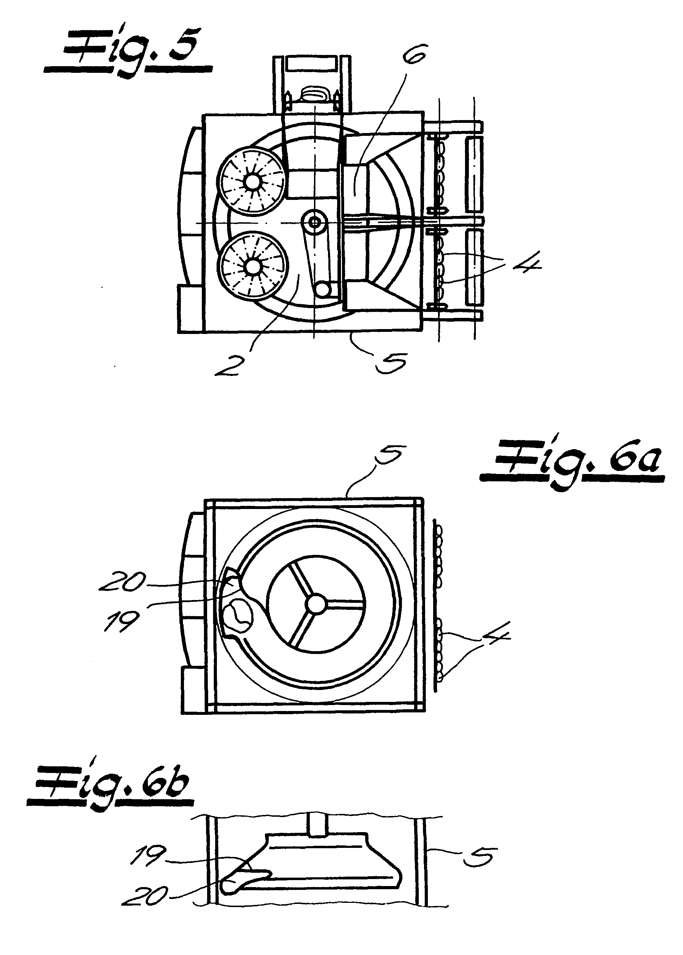

Man erkennt anhand der Figuren 5, 6a und 6b, dass für die Entnahme der gebackenen Teiglinge 4 aus den rotierenden Backkegeln 10 a, 10b bzw. der Rotoreinheit 10 ein drehrichtungsabhängiges Element 19 vorgesehen ist, welches grundsätzlich so wie der bereits beschriebene Auswurfabweiser 12 arbeitet und ebenfalls an die Steuereinheit 13 angeschlossen ist. Das drehrichtungsabhängige Element 19 wirkt in der in der Backdrehrichtung der rotierenden Backkegel 10a, 10b als Abweiser 19, d. h. hebt die Teiglinge 4 über eine im äußeren Backkegel 10a ausgebildete Entnahmeöffnung 20 hinweg. In der Ausschleusedrehrichtung der rotierenden Backkegel 10a, 10b wirkt das drehrichtungsabhängige Element 19 dagegen als Einführer und überführt die Teiglinge 4 in die Entnahmeöffnung 20.

Die gleiche Funktionalität wie bei den Backkegeln 10a, 10b liegt bei der Rotoreinheit 10 nach Fig. 1 vor, wie bereits beschrieben worden ist. - Von der Backkammer 2 gelangen die fertiggebackenen Teiglinge 4 nach Passieren einer - von der Steuereinrichtung 13 beaufschlagten - Klappe 21 in das Vorratsmagazin 14 unterhalb der Backkammer 2. Die Klappe 21 ist als Weiche für die fertiggebackenen Teiglinge 4 ausgeführt.

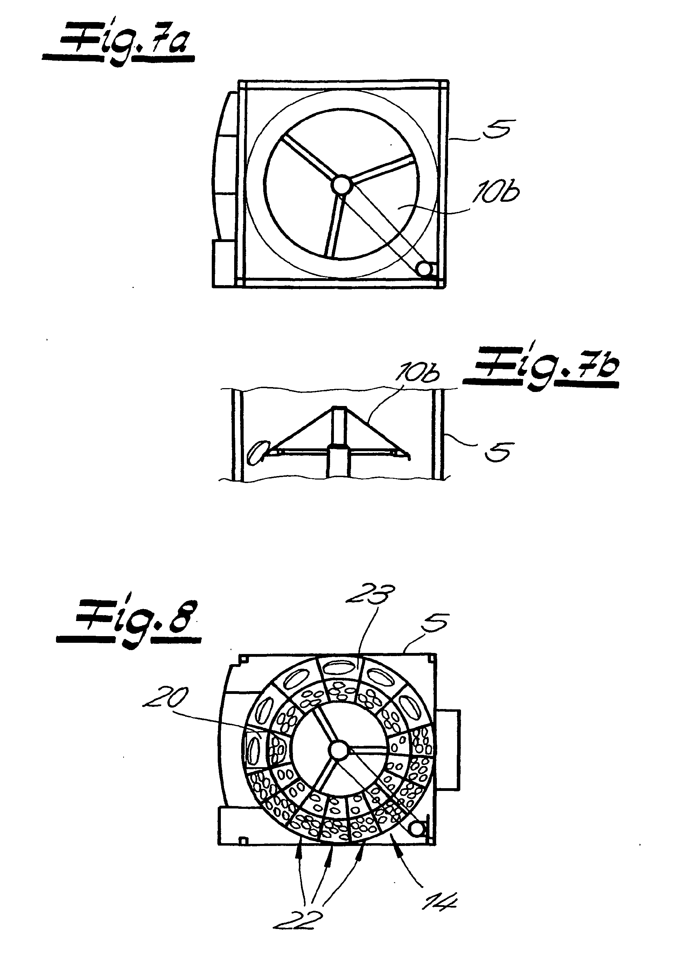

Anhand der Fig. 8 erkennt man, dass das Vorratsmagazin 14 über zwei kreisförmig in konzentrischen Ringen angeordnete Magazine mit zugehörigen Kammern 22 verfügt. Die Kammern 22 besitzen eine unterschiedliche Größe, die durch entsprechend gestaltete Trennwände zudem variabel gestaltet werden kann. Auf diese Weise lassen sich einzelne Kammern 22 zur Bevorratung eines oder mehrerer Brote einstellen. Das kann durch in Rastaufnahmen gehaltene variabel einsteckbare Trennwände zur Definition der einzelnen Kammern 22 erfolgen.

Die einzelnen Kammern 22 sind im Wesentlichen als Zylindermäntel ausgebildet, d. h. es handelt sich um oben und unten offene Ringe. Die betreffenden Ringe lassen sich mit Hilfe des dargestellten Riemenantriebes drehen, so dass die jeweiligen Kammern 22 auf einer Kreisbahn rotieren. Eine gehäusefeste Bodenplatte 23 schließt die betreffenden Kammern 22 nach unten hin ab, wobei in dieser Bodenplatte 23 eine oder mehrere Doppelklappen 24 vorgesehen sind. Tatsächlich findet sich eine Doppelklappe 24 zur Übergabe der gebackenen Teiglinge 4 an eine Ausgabevorrichtung 25, während die Doppelklappe 24' zu alte gebackene Teiglinge 4 bzw. altgebackene Teiglinge 4 ausschleust. Zu diesem Zweck mögen diese ausgeschleusten und gebackenen Teiglinge 4 in einem Behälter 26 bevorratet werden, welcher vom Servicepersonal turnusmäßig entleert wird.

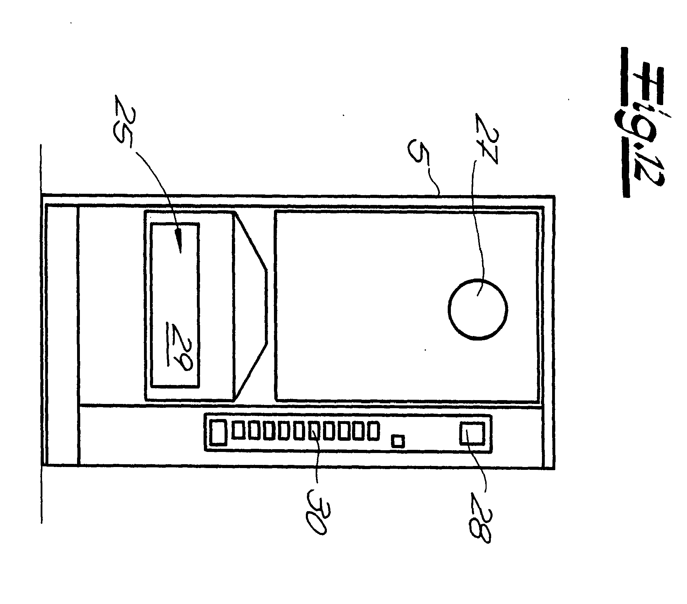

Anhand der Fig. 12 erkennt man, dass das Gehäuse 5 des dargestellten Back-/Ausgabeautomaten mit einem Ventilator 27 ausgerüstet ist. Außerdem findet sich an der Frontseite eine Zahleinheit 28, welche die Entnahme der Fertigprodukte durch eine Klappe 29 im Bereich der Ausgabevorrichtung 25 hin steuert. Diese Klappe 29 wird geöffnet, sobald die Steuereinrichtung 13 nach Abfrage der Zahleinheit 28 die korrekte Bezahlung der über ein Tastaturfeld 30 vorgewählten Backwaren registriert hat.

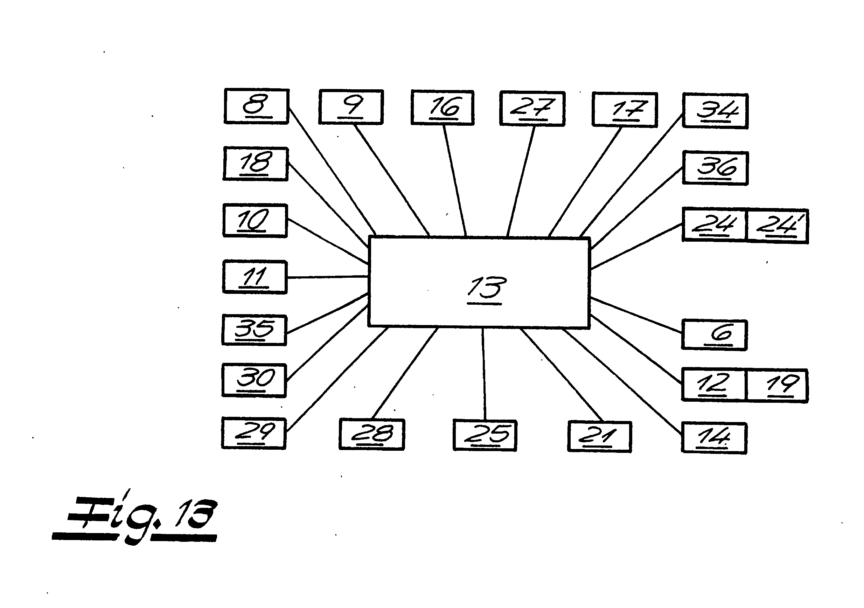

Die Frontseite des Gehäuses 5 kann als Sichtscheibe ausgebildet sein, um den Blick auf einzelne Bestandteile im Inneren freizugeben. - Für die Steuerung des in Folge der Zahleinheit 28 als Verkaufsautomat ausgebildeten Back-/Ausgabeautomaten sorgt die Steuereinrichtung 13, deren Struktur und Wirkungsweise anhand der Fig. 13 näher erläutert wird. Tatsächlich ist die Steuereinrichtung 13 lernfähig ausgebildet und leitet aus den nachfolgenden Parametern - einzeln oder in Kombination - ein entsprechendes Steuerprogramm ab, welches die in der Folientaschenbahn 7 befindlichen Teiglinge 4 aus dieser entfernt, nachfolgend in der Backkammer 2 backt, in das Vorratsmagazin 14 weiterbefördert und schließlich in die Ausgabevorrichtung 25 überführt. Außerdem sorgt die Steuereinrichtung 13 dafür, dass die gebackenen Teiglinge 4 vor dem Erreichen der Ausgabevorrichtung 25 noch in der Entnahmestation 3 verpackt werden. Das kann einzeln in Papiertüten 31 erfolgen oder auch dergestalt, dass ein Schlauch 32 zu Beuteln vorwählbarer Größe verarbeitet wird.

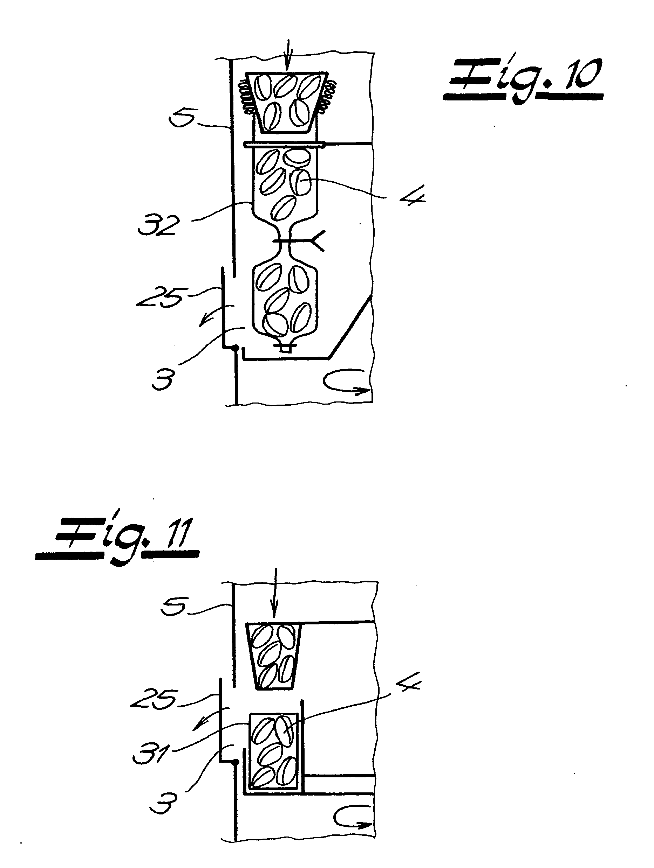

Der Schlauch 32 entsprechend der Fig. 10 mag dabei aus Kunststoff, Papier oder einem vergleichbaren Werkstoff hergestellt sein. Einzelne Schlauchabschnitte werden gegeneinander abgetrennt und mit Hilfe von Klipsen und/oder durch Verschweißen etc. verschlossen. Je nach in der jeweiligen Papiertüte 31 bzw. dem Schlauch 32 verpackter Anzahl an gebackenen Teiglingen 4, kann die Steuereinrichtung 13 einen Abgleich mit den ungebackenen Teiglingen 4 vornehmen. Denn mit hilfe des Zählers 18 lässt sich die Anzahl der ungebackenen Teiglinge 4 in der Lagervorrichtung 1 ermitteln. Wird diese Anzahl mit den abgepackten Fertigprodukten in der Entnahmestation 3 verglichen, so kann die Steuereinrichtung 13 beide Zahlen auf Plausibilität hin prüfen bzw. hieraus die Zahl der altgebackenen Teiglinge 4 ermitteln, die sich regelmäßig im Behälter 26 befinden.

Die Steuereinrichtung 13 greift insgesamt auf ein Mikroprozessorsystem mit einer CPU, einem Programmspeicher, einem Arbeitsspeicher sowie wenigstens einer Eingabeschnittstelle und mindest einer Ausgabeschnittstelle zurück.

An die Steuereinrichtung 13 ist eine Auswahleinrichtung 35 angeschlossen, die dafür sorgt, dass je nach Lagerzeit der Teiglinge 4 in dem Vorratsmagazin 14 die Teiglinge 4 ggf. in den Behälter 26 ausgeschleust werden, weil sie zu alt sind. Die Lagerzeit der Teiglinge 4 ist der Steuereinrichtung 13 bekannt, weil mit Hilfe des Zählers 18 und durch Registrieren der verpackten gebackenen Teiglinge 4 in den Papiertüten 31 bzw. 32 der Weg der Teiglinge 4 verfolgt und mit einer in der Steuereinrichtung 13 vorhandenen Uhr abgeglichen werden kann.

Ansonsten sorgt die Steuereinrichtung 13 dafür, dass die jeweils angeschlossenen Aggregate nach der Fig. 13 entsprechend dem Kundenwunsch betätigt werden. So "weiß" die Steuereinrichtung 13 anhand des abgespeicherten Käuferverhaltens und unter Berücksichtigung der integrierten Uhr, wie hoch der aktuell zu erwartende Absatz an fertig gebackenen Teiglingen 4 einzuschätzen ist. Je nach diesen zu erwartenden Verkaufszahlen sorgt die Steuereinrichtung 13 dafür, dass die hiervon beaufschlagte Fördervorrichtung 8 für Nachschub an halbgebackenen oder gefrosteten Teiglingen 4 in der Schütte 6 sorgt. Dabei mag ergänzend die Messervorrichtung 9 von der Steuereinrichtung 13 entsprechend beaufschlagt werden.

Ebenso wird die Rotoreinheit 10 in Gang gesetzt, sobald die ungebackenen bzw. unfertigen Teiglinge 4 von der Schütte 6 in die Backkammer 2 gelangen. Gleiches gilt für die Heizeinrichtung 11 sowie ggf. den Beschwader 16. Das alles leistet die Steuereinrichtung 13. Dabei wird der Feuchtegehalt der gebackenen Teiglinge 4 in der Backkammer 2 mit Hilfe des Feuchtesensors ermittelt. Dieser Feuchtesensor ist mit einem weiteren Sensor 34 in der Backkammer 2 zusammengefasst, um den Fortschritt des Backvorganges zu überwachen. Das kann so erfolgen, dass beispielsweise die "Farbe" der gebackenen Teiglinge 4 überwacht wird. Je nach dem, welche Daten der Sensor 34 bzw. der Feuchtesensor an die Steuereinrichtung 13 liefert, wird die Heizeinrichtung 11 und/oder der Beschwader 16 angesteuert. Gleiches gilt für den an die Steuereinrichtung 13 angeschlossenen Ventilator 27. Sobald die Teiglinge 4 fertiggebacken sind, bewirkt die Steuereinrichtung 13 über die Rotoreinheit 10, dass die gebackenen Teiglinge 4 aus der Backkammer 2 ausgeschleust werden.

Wie bereits ausgeführt, ist auch der Kühlbereich 6 an die Steuereinrichtung 13 angeschlossen. Das Gleiche gilt für einen an dieser Stelle lediglich angedeuteten Temperatursensor 36, welcher die Umgebungstemperatur ermittelt. Je nach Umgebungstemperatur und damit von dem Temperatursensor 36 an die Steuereinrichtung 13 übermittelten Wert wird der Kühlbereich 6 mehr oder minder gekühlt, um die aus der Folientaschenbahn 7 entfernten und noch unfertigen Teiglinge 4 vor klimatischen Beeinträchtigungen zu bewahren.

Endlich ist im Gehäuse 5 des Back-/Ausgabeautomaten ein nicht ausdrücklich gezeigter Anschluss vorgesehen, an welchen ein Sauger bzw. Staubsauger angeschlossen werden kann. Mit dessen Hilfe lässt sich das Innere, insbesondere die Backkammer 2 sowie das Innere des Vorratsmagazines 14 zu gewissem Grade evakuieren, um auf diese Weise Krümmel, eventuell Staub, Feuchtigkeit etc. aus dem Inneren zu entfernen. Dadurch wird eine besonders wirkungsvolle Reinigung erreicht und Hygieneanforderungen Rechnung getragen. In die gleiche Richtung mag eine ebenfalls nicht dargestellte Gehäuseheizung wirken, die etwaige Feuchtigkeitsbildung im Inneren des Gehäuses 5 von vorneherein verhindert.

## Patentansprüche

1. Vorrichtung zur Herstellung von gebrauchsfertigen Backwaren wie Brötchen, Broten etc., mit wenigstens einer Lagervorrichtung (1), einer Backkammer (2) und einer Entnahmestation (3), wobei
Teiglinge (4) als Vorprodukte von der Lagervorrichtung (1) in die Backkammer (2) überführt werden und anschließend als Fertigprodukte die Entnahmestation (3) verlassen, und wobei
die Lagervorrichtung (1), die Backkammer (2) und die Entnahmestation (3) zusammengenommen einen Back-/Ausgabeautomaten bilden,
**dadurch gekennzeichnet, dass**
fertig gebackene Teiglinge (4) von der Backkammer (2) nach Passieren einer von einer Steuereinrichtung (13) beaufschlagten Klappe (21) in ein Vorratsmagazin (14) unterhalb der Backkammer (2) gelangen,
die Entnahmestation (3) eine Auswahlvorrichtung (14, 35) mit einem karussellförmig ausgebildeten Vorratsmagazin (14) mit einzelnen Kammern (22) sowie mit einer Auswahleinrichtung (35) aufweist, und dass
die Steuereinrichtung (13) bei Überschreiten einer von ihr überwachten maximalen Lagerzeit der gebackenen Teiglinge (4) in der Entnahmestation in Verbindung mit der Auswahlvorrichtung (14, 35) dafür sorgt, dass die besagten Teiglinge (4) in dem Vorratsmagazin (14) in einen Behälter (26) ausgeschleust und durch frische Backwaren ersetzt werden.

2. Vorrichtung nach Anspruch 1, **dadurch gekennzeichnet, dass** der Back-/Ausgabeautomat als Verkaufsautomat ausgebildet ist und zusätzlich eine Zahleinheit (28) zur Steuerung der Entnahme der Fertigprodukte aufweist.

3. Vorrichtung nach Anspruch 1 oder 2, **dadurch gekennzeichnet, dass** die Backkammer (2) mit einer Rotoreinheit (10) ausgerüstet ist, welche den Backvorgang der Teiglinge (4) vergleichmäßigt und/oder die gebackenen Teiglinge (4) aus der Backkammer (2) ausschleust.

4. Vorrichtung nach einem der Ansprüche 1 bis 3, **dadurch gekennzeichnet, dass** die Backkammer (2) gegenüber ihrer Umgebung thermisch isolierend ausgebildet ist.

5. Vorrichtung nach einem der Ansprüche 1 bis 4, **dadurch gekennzeichnet, dass** eingangsseitig der Backkammer (2) eine Vereinzelungs-/Entpackstation (7, 8, 9) für die vorzugsweise in Folientaschenbahnen (7) in der Lagervorrichtung (1) bevorrateten Teiglinge (4) realisiert ist.

6. Vorrichtung nach einem der Ansprüche 1 bis 5, **dadurch gekennzeichnet, dass** die gebackenen Teiglinge (4) in der Entnahmestation (3) verpackt, beispielsweise einzeln oder zu mehreren in einer Papiertüte (31) zusammengefasst, werden.

7. Vorrichtung nach einem der Ansprüche 1 bis 6, **dadurch gekennzeichnet, dass** die Lagervorrichtung (1) einen Kühlbereich (6) zur Bevorratung vereinzelter und entpackter Teiglinge (4) aufweist.

8. Vorrichtung nach einem der Ansprüche 1 bis 7, **dadurch gekennzeichnet, dass** eine Steuereinrichtung (13) vorgesehen ist, welche wenigstens die Zufuhr an Teiglingen (4), deren Backen und ihre Ausgabe steuert.

9. Vorrichtung nach Anspruch 8, **dadurch gekennzeichnet, dass** die Steuereinrichtung (13) lernfähig ausgebildet ist und zumindest aus folgenden Parametern (einzeln oder in Kombination) ein Steuerungsprogramm ableitet: Aufstellungsort, Wochentag, Uhrzeit, Klimabedingungen und Käuferverhalten.

## Claims

1. A device for manufacturing ready-to-use baked goods such as bread rolls, loaves of bread, etc., with at least one storage device (1), a baking chamber (2) and a dispensing station (3), whereby
shaped dough pieces (4) as preproducts are transferred from the storage device (1) into the baking chamber (2) and then leave the dispensing station (3) as finished products, and whereby
the storage device (1), the baking chamber (2) and the dispensing station (3) together form an automatic baking/output system,
**characterized in that**
completely baked dough pieces (4) go from the baking chamber (2) into a storage magazine (14) beneath the baking chamber (2) after passing through a flap (21) that is subject to control by a control device (13),
the dispensing station (3) has a selector device (14, 35) with a storage magazine (14) designed like a carousel with individual chambers (22) and with a selector device (35), and
when the storage time of the baked dough pieces (4) in the dispensing station exceeds the maximum storage time, which is monitored by the control device, said control device (13) in combination with the selector device (14, 35) ensures that said dough pieces (4) are discharged out of the storage magazine (14) into a container (26) and replaced by fresh baked goods.

2. The device according to Claim 1, **characterized in that** the automatic baking/output machine is designed as an automatic retail dispenser and additionally has a counting unit (28) for controlling the withdrawal of finished products.

3. The device according to Claim 1 or 2, **characterized in that** the baking chamber (2) is equipped with a rotor unit (10), which makes the process of baking the dough pieces (4) uniform and/or discharges the baked dough pieces (4) out of the baking chamber (2).

4. The device according to any one of Claims 1 to 3, **characterized in that** the baking chamber (2) is designed to be thermally insulated with respect to its environment.

5. The device according to any one of Claims 1 to 4, **characterized in that** an isolating/unpacking station (7, 8, 9) for the dough pieces (4), which are preferably stored in film pocket sheets (7) in the storage device (1), is implemented at the input end of the baking chamber (2).

6. The device according to any one of Claims 1 to 5, **characterized in that** the baked dough pieces (4) are packaged in the dispensing station (3), e.g., individually or with several dough pieces combined in one paper bag (31).

7. The device according to any one of Claims 1 to 6, **characterized in that** the storage device (1) has a cooling area (6) for storing separated and unpacked dough pieces (4).

8. The device according to any one of Claims 1 to 7, **characterized in that** a control device (13), which controls at least the supply of dough pieces (4), their baking and their output, is provided.

9. The device according to Claim 8, **characterized in that** the control device (13) is designed to be capable of learning and a control program is derived at least from the following parameters (individually or in combination): installation site, day of the week, time of day, climate conditions and purchaser behavior.

## Revendications

1. Dispositif de production de produits de boulangerie prêts à consommer, comme des petits pains, des pains, etc., comportant au moins un dispositif de stockage (1), une chambre de cuisson (2) et un poste de déchargement (3), dans lequel
des pâtons levés (4) sont transférés en tant que produits précurseurs du dispositif de stockage (1) dans la chambre de cuisson (2) et quittent ensuite le poste de déchargement (3) comme des produits finis, et dans lequel
le dispositif de stockage (1), la chambre de cuisson (2) et le poste de déchargement (3) sont regroupés en formant un automate de cuisson/distribution,
**caractérisé en ce que**
des pâtons levés (4) cuits à point parviennent depuis la chambre de cuisson (2) après être passés par un clapet (21) sollicité par un dispositif de commande (13) dans un magasin de stockage (14) en dessous de la chambre de cuisson (2),
le poste de déchargement (3) présente un dispositif de sélection (14, 35) comportant un magasin de stockage (14) configuré comme un carrousel avec des chambres individuelles (22) ainsi qu'un dispositif de sélection (35), et **en ce que**
le dispositif de commande (13) assure, lorsque un temps de stockage maximal des pâtons (4) cuits qu'il surveille est dépassé dans le poste de déchargement en liaison avec le dispositif de sélection (14, 35), que lesdits pâtons (4) soient éjectés dans le magasin de stockage (14) dans un récipient (26) et soient remplacés par des produits de boulangerie frais.

2. Dispositif selon la revendication 1, **caractérisé en ce que** l'automate de cuisson/distribution est configuré comme un automate de vente et présente en outre une unité de comptage (28) pour commander le déchargement des produits finis.

3. Dispositif selon la revendication 1 ou 2, **caractérisé en ce que** la chambre de cuisson (2) est équipée d'une unité de rotor (10), laquelle homogénéise le processus de cuisson des pâtons levés (4) et/ou éjecte les pâtons levés (4) cuits hors de la chambre de cuisson (2).

4. Dispositif selon une des revendications 1 à 3, **caractérisé en ce que** la chambre de cuisson (2) est configurée avec une isolation thermique par rapport à son environnement extérieur.

5. Dispositif selon une des revendications 1 à 4, **caractérisé en ce que** du côté de l'entrée de la chambre de cuisson (2) est réalisé un poste d'individualisation/déballage (7, 8, 9) des pâtons levés (4) stockés dans le dispositif de stockage (1) de préférence en trains de sacs filmés (7).

6. Dispositif selon une des revendications 1 à 5, **caractérisé en ce que** les pâtons cuits (4) sont emballés dans le poste de déchargement (3), par exemple individuellement ou regroupés à plusieurs dans un sac en papier (31).

7. Dispositif selon une des revendications 1 à 6, **caractérisé en ce que** le dispositif de stockage (1) présente une zone de refroidissement (6) pour entreposer des pâtons (4) individualisés et déballés.

8. Dispositif selon une des revendications 1 à 7, **caractérisé en ce que** un dispositif de commande (13) est prévu, lequel commande au moins l'introduction de pâtons (4), leur cuisson et leur distribution.

9. Dispositif selon la revendication 8, **caractérisé en ce que** le dispositif de commande (13) est configuré comme étant capable d'apprendre et déduit un programme de commande à partir d'au moins les paramètres suivants (individuels ou en combinaison) : lieu de commercialisation, jour de la semaine, heure, conditions climatiques et comportement de l'acheteur.
